Europäisches Patentamt

**European Patent Office**

**Office européen des brevets**

(11) Numéro de publication: **0 006 394**
A1

## (12) DEMANDE DE BREVET EUROPEEN

(21) Numéro de dépôt: **79430013.7**

(22) Date de dépôt: **01.06.79**

(51) Int. Cl.³: **A 01 G 25/09**

(30) Priorité: **09.06.78 FR 7817849**

(43) Date de publication de la demande: **09.01.80** Bulletin 80/1

(84) Etats contractants désignés: **AT BE CH DE FR GB IT NL SE**

(71) Demandeur: **Lebrun, Henri, Le Thuel, F-02340 Montcornet (FR)**
Demandeur: **Boutboul, Pierre, 71, rue Liandier, Marseille (FR)**

(72) Inventeur: **Lebrun, Henri, Le Thuel, F-02340 Montcornet (FR)**
Inventeur: **Boutboul, Pierre, 71, rue Liandier, Marseille (FR)**

(74) Mandataire: **Azais, Henri et al, c/o CABINET BEAU DE LOMENIE 14, rue Raphael, F-13008 Marseille (FR)**

(54) **Appareils mobiles d'arrosage par aspersion de surfaces cultivées.**

(57) L'invention a pour objet un appareil mobile pour arroser des surfaces cultivées qui comportent un chariot automoteur portant un rotor d'arrosage 15 composé de bras tubulaires 16a, 16b qui portent des lances d'arrosage 21a, 21b et qui sont montés sur un pivot creux 17 connecté à une arrivée d'eau 10 elle-même connectée à une bouche d'eau 3 par un tuyau flexible 2.

Le chariot 1 porte une turbine hydraulique 13 entraînée par l'eau d'arrosage et des organes de transmission 34, 36, 40, 41, 42 qui entraînent ledit pivot en rotation indépendamment de la réaction des jets d'eau.

EP 0 006 394 A1

- 1 -

<u>Appareils mobiles d'arrosage par aspersion de surfaces culti-</u>
<u>vées.</u>

L'invention a pour objet des appareils mobiles d'arrosage par aspersion de surfaces cultivées par exemple des champs de céréales (maïs), de légumes (tomates, salades) et généralement de culture de plantes plantées en rangées.

De plus en plus,pour arroser par aspersion des champs cultivés, on abandonne les tuyaux perforés posés sur le sol au profit d'appareils mobiles portant des asperseurs qui sont déplacés automatiquement de façon continue à travers un champ. Le plus souvent, ce déplacement est obtenu en utilisant la pression de l'eau d'arrosage, de telle sorte que l'appareil est autonome pendant l'arrosage. L'asperseur est relié à la source d'eau par un tuyau flexible. Dans certains appareils connus, le tuyau flexible s'enroule sur une bobine et tire l'asperseur ou déplace un chariot portant la bobine et l'asperseur. Dans d'autres appareils connus, le chariot qui porte l'asperseur tire derrière lui le tuyau flexible qui forme une boucle posée sur le sol ou passant sur une poulie. Les asperseurs utilisés à ce jour sur ces appareils d'arrosage mobiles sont de deux types principaux.

Un premier type d'asperseurs est constitué par des canons d'arrosage qui sont composés d'une lance qui projette à grande distance un jet d'eau puissant sous une forte pression et dont la rotation couvre un secteur angulaire. Le canon tourne par saccades sous l'action du jet d'eau sur un levier portant une cuillère. Les canons d'arrosage ont une grande portée, de l'ordre de 50 mètres et un débit élevé de l'ordre de 20 à

100 m³/h. Ils nécessitent une pression élevée égale à au moins 5 bars. Entre chaque saccade, les canons d'arrosage délivrent un apport d'eau massif sur une surface réduite d'où une très forte pluviométrie instantanée qui engendre de graves inconvénients tels que le tassement du sol, le ruissellement de l'eau et la détérioration des plantes qui sont souvent couchées ou brisées par les retombées d'eau.

Les brevets français 71/13.802, FR. 72/12.990, FR. 74/07.096 et FR. 77/31.780 décrivent des appareils mobiles d'arrosage équipés d'un canon.

Un autre type d'asperseur connu est constitué par des tourniquets ou rotors composés de paires de bras diamétralement opposés, montés sur un pivot vertical et portant chacun une lance à eau à son extrémité libre. La réaction des jets d'eau donne naissance à un couple qui entraîne le rotor dans un mouvement de rotation continu autour du pivot vertical et on a construit des appareils mobiles dans lesquels le rotor est monté sur un chariot qui est déplacé par le tourniquet qui fait fonction de moteur hydraulique. Les brevets FR. 73/07.827 et FR. 72/31.034 décrivent des appareils de ce dernier type. Ces derniers présentent par rapport aux appareils à canon asperseur l'avantage que la pluviométrie instantanée est plus faible, mais ils présentent les inconvénients suivants. Ils arrosent une surface circulaire qui s'étend tout autour de l'appareil mobile, notamment à l'avant de celui-ci, de telle sorte que l'appareil doit progresser sur un terrain déjà arrosé ce qui rend la progression difficile. Les lances d'arrosage ne peuvent pas être disposées radialement afin que la réaction des jets ait une composante tangentielle qui crée le couple de rotation ce qui réduit la portée des lances.

Il est nécessaire que la pression des jets soit assez élevée, de l'ordre de 5 bars, pour donner naissance à un couple suffisant pour entraîner le rotor et éventuellement le chariot qui le porte. De plus, une partie de l'énergie de l'eau est transformée en travail mécanique avec un très mauvais rendement, ce qui réduit la portée des jets d'eau. Enfin, il n'est pratiquement pas possible de faire varier la pluviométrie instantanée car si l'on diminue la pression pour réduire le débit, on réduit automatiquement la vitesse de rotation et la pluviométrie instantanée reste sensiblement la même.

Un objectif de la présente invention est de procurer des appareils mobiles d'arrosage équipés de rotors portant des lances d'arrosage placées à l'extrémité de bras montés sur un pivot vertical qui remédient aux inconvénients des asperseurs connus du type canon ou du type rotor entraîné par le couple dû à la réaction des jets d'eau.

Un autre objectif de la présente invention est de procurer des appareils d'arrosage par aspersion qui distribuent l'eau répartie en fines gouttelettes avec une pluviométrie instantanée qui ne détériore pas les plantes, qui permet de régler facilement cette pluviométrie selon la nature des plantes et qui permet également d'utiliser de l'eau d'arrosage distribuée sous une pression relativement faible de l'ordre de 3 bars par exemple.

L'invention concerne des appareils mobiles pour arroser par aspersion des surfaces cultivées qui comportent, de façon connue, un chariot automoteur qui est relié à une bouche d'eau par un tuyau flexible, et qui porte un rotor d'arrosage comportant des bras tubulaires, portant chacun une lance d'arrosage, qui sont montés sur un pivot vertical creux.

Les objectifs de l'invention sont atteints au moyen d'un appareil mobile d'arrosage de ce type dans lequel le chariot automoteur porte un moteur et des organes de transmission mécaniques pour entraîner ledit rotor en rotation continue par ledit moteur, de façon indépendante de la réaction des jets d'eau sortant des lances.

Selon un mode de réalisation préférentiel, le chariot mobil comporte une turbine hydraulique qui est entraînée en rotation par l'eau d'arrosage et des moyens de locomotion qui sont entraînés par ladite turbine et il comporte une transmission mécanique et un variateur de vitesse qui transmettent le mouvement de rotation de la turbine au pivot portant le rotor.

Chacun des bras tubulaires du rotor porte une vanne qui est munie d'une tige de manoeuvre qui est dirigée vers le bas et qui porte à son extrémité inférieure un organe de manoeuvre en rotation et le chariot automoteur porte des butées qui coopèrent avec lesdits organes de manoeuvre, de telle sorte qu'au cours de chaque tour du rotor, chaque vanne est successivement ouverte par une butée puis fermée par l'autre butée et que le rotor arrose uniquement à l'intérieur d'un secteur circulaire. De préférence, le pivot du rotor est maintenu par un palier qui est situé légèrement au-dessous des bras tubulaires et ledit chariot porte des portiques stabilisateurs qui supportent ledit palier.

L'invention a pour résultat de nouveaux appareils mobiles pour arroser automatiquement et de façon continue des bandes successives cultivées. La largeur de chaque bande cultivée est égale à deux fois la portée maxima de l'asperseur porté par le chariot automoteur. Du fait que le rotor est entraîné en rotation par l'intermédiaire d'un moteur et d'une transmission mécanique, et donc de façon totalement indépendante de la réaction des jets d'eau, permet d'obtenir une portée plus grande. En effet, les lances d'arrosage peuvent être disposées radialement et même légèrement inclinées vers l'avant et vers le haut pour obtenir la portée maxima sans avoir à rechercher un compromis entre la portée et le couple de rotation dû à la réaction des jets.

Un autre avantage des appareils selon l'inventon réside dans le fait que l'on peut faire tourner le rotor à la vitesse que l'on désire en utilisant un variateur de vitesse. La vitesse du rotor est totalement indépendante du débit des lances et on peut donc faire varier à volonté la pluviométrie instantanée. Notamment on peut obtenir une vitesse de rotation beaucoup plus élevée que celle des rotors connus qui sont entraînés par la réaction des jets et on peut donc atteindre, lors de chaque passage du rotor au-dessus d'une zone de culture, une pluviométrie instantanée faible se rapprochant de celle d'une averse de pluie qui ne risque pas d'abimer des cultures fragiles par exemple des cultures de fleurs, de fruits ou de légumes.

Un autre avantage des appareils selon l'invention, munis d'un rotor entraîné mécaniquement en rotation de façon indépendante, et comportant des paires de lances diamétralement
opposées, tient au fait qu'il devient possible d'arrêter automatiquement une lance sur deux de chaque paire de telle sorte
que le rotor n'arrose plus que sur un demi-cercle tout en continuant à tourner autour du pivot. Une telle disposition ne
serait pas possible sur les rotors connus qui sont entraînés
par le couple de réaction car il est nécessaire sur ceux-ci
de créer ce couple et donc d'avoir constammant deux jets diamétralement opposés. Le fait de pouvoir arroser uniquement à
l'intérieur d'un secteur angulaire permet par exemple de choisir un secteur situé à l'arrière du chariot automoteur de telle
sorte que celui-ci progresse en terrain sec. On peut également
prévoir des butées déplaçables sur un secteur circulaire, de
telle sorte qu'il est possible de modifier l'orientation du
secteur arrosé ce qui est particulièrement avantageux dans le
cas où l'on doit arroser le long de la limite d'un champ.

La description suivante se réfère aux dessins annexés qui représentent, sans aucun caractère limitatif, un exemple de réalisation d'un appareil d'arrosage mobile conforme à l'invention.

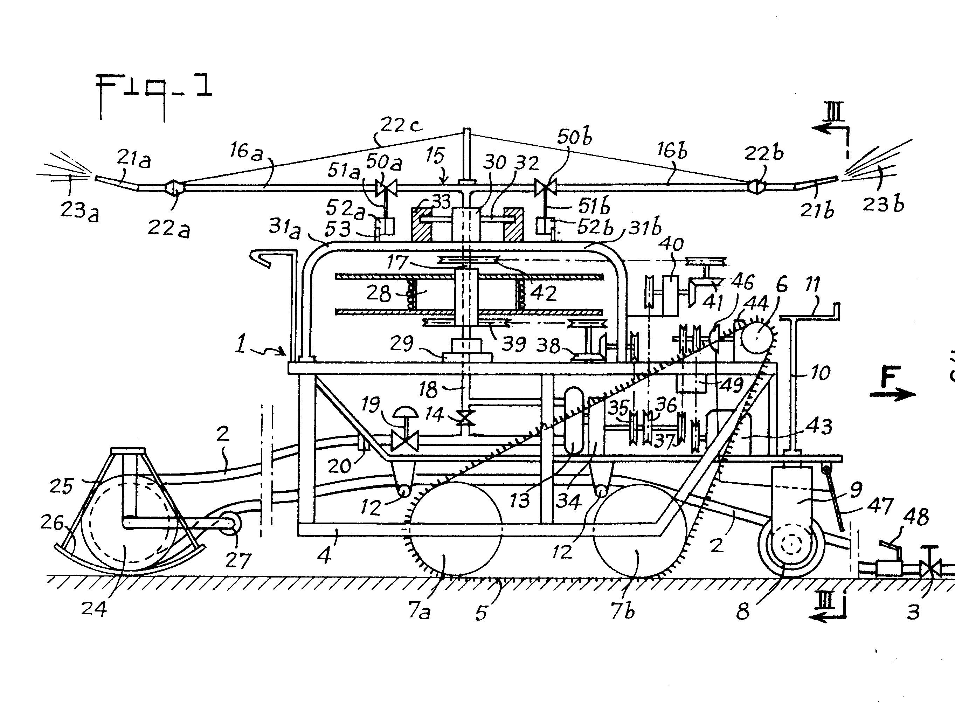

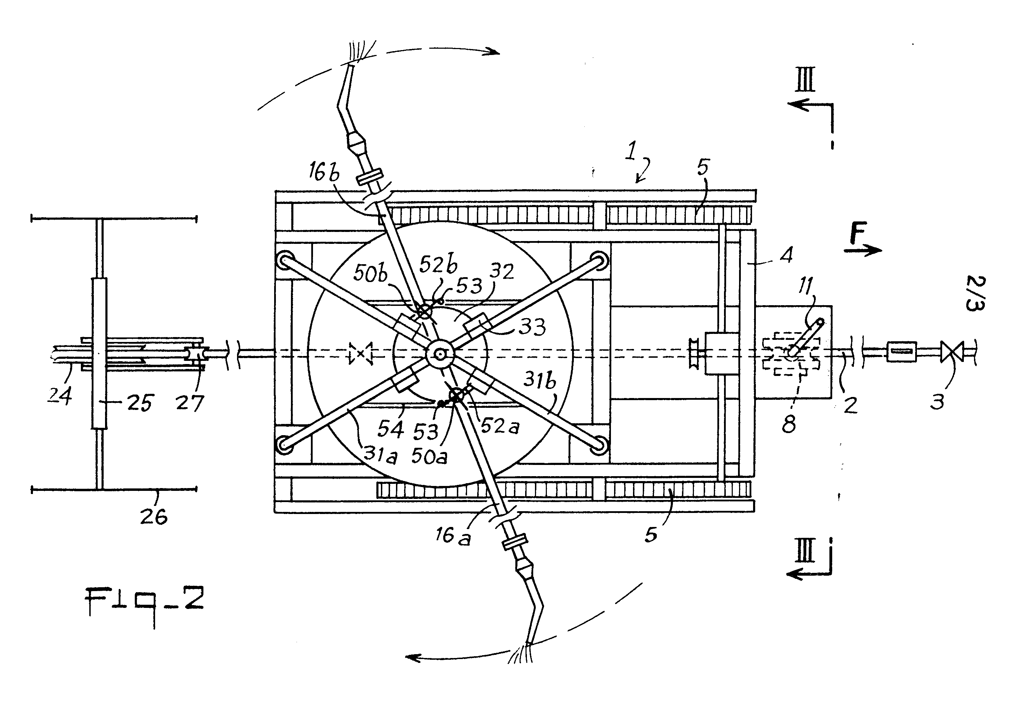

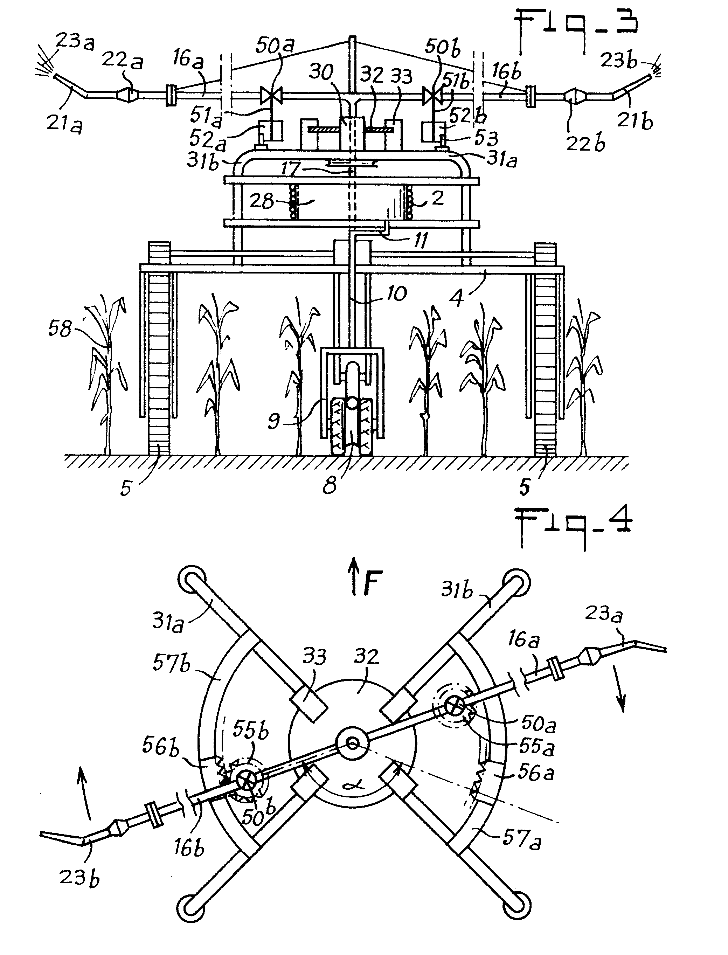

La figure 1 est une vue en élévation; la figure 2
est une vue de dessus; la figure 3 est une vue
transversale selon III-III; la figure 4 est une
vue de dessus partielle d'une variante de réalisation.

Les figures 1, 2 et 3 représentent à titre d'illustration,
un appareil d'arrosage mobile destiné à arroser par aspersion
de façon continue et automatiquement des bandes successives de
champs cultivés. Cet appareil comporte un chariot automoteur
1 qui est relié par un tuyau flexible 2 à une bouche d'eau
3. Le chariot 1 comporte un châssis enjambeur 4 et des organes de locomotion qui sont constitués, de préférence, par deux
chenillettes 5, qui sont entraînées par deux roues motrices
6 et qui comportent chacune deux roues 7a, 7b qui appuient
la chenille sur le sol. Bien entendu, les chenilles pourraient
être remplacées par des roues motrices.

Le chariot 1 comporte une roue avant directrice 8 qui comporte une gorge dans laquelle passe le tuyau 2. Cette roue avant 8 est montée dans une chape 9 articulée autour d'un arbre vertical 10 qui est muni d'une poignée 11 ou d'un volant qui permet de diriger le chariot sur route. Dans le champ, pendant l'arrosage, le chariot se guide seul en suivant le tuyau 2. Le tuyau flexible 2 passe sur des rouleaux de guidage 12 portés par le châssis 4. Le chariot 1 est équipé d'une turbine hydraulique 13 qui est traversée par l'eau d'arrosage et entraînée en rotation par celle-ci. Une vanne 14 permet de faire passer l'eau d'arrosage dans la turbine 13 ou de court-circuiter celle-ci.

Le chariot 1 porte un rotor d'arrosage 15 qui comporte des bras tubulaires creux 16a et 16b qui sont montés sur un pivot vertical creux 17. On a représenté un exemple de réalisation dans lequel le rotor comporte deux bras 16a et 16b diamétralement opposés, mais il pourrait bien entendu comporter un nombre de bras quelconque.

Le pivot creux 17 est connecté par l'intermédiaire d'un joint tournant sur un tube fixe coaxial 18 qui comporte une vanne 19 et une arrivée d'eau 20 sur laquelle est connectée la deuxième extrémité du tuyau 2. Les bras 16a et 16b peuvent être de longueur variable, par exemple par un dispositif télescopique. Chaque bras tubulaire 16a, 16b porte à son extrémité libre une lance 21a, 21b qui est alimentée en eau à travers le tube 2, l'arrivée d'eau 20, le tube fixe 18, éventuellement la turbine 13, le pivot creux 17 et l'un des bras tubulaires 16a ou 16b. Les lances 21a et 21b sont montées sur des raccords à rotule 22a, 22b qui permettent de faire varier l'inclinaison et/ou l'orientation des lances et donc des jets d'eau 23a, 23b qu'elles distribuent. Des tendeurs fixés sur des haubans 22c permettent de manoeuvrer les rotules.

L'appareil représenté sur les figures 1 à 3 comporte, en outre, une poulie verticale de renvoi 24 qui est portée par un portique 25 posé sur deux patins 26 qui glissent sur le sol. Le tuyau 2 passe sur la poulie 24 en formant une boucle. Le portique 25 est télescopique comme on le voit sur la figure 2, ce qui permet de faire varier la largeur.

Il porte une petite poulie 27 de guidage du tuyau.

Le chariot 1 porte, en outre, une bobine 28 qui est coaxiale avec le pivot 17. La bobine 28 sert au stockage et au transport du tuyau 2 en dehors des périodes d'arrosage. Le tuyau 2 peut être formé de plusieurs tronçons que l'on assemble bout à bout selon les besoins. Le pivot 17 est supporté par un joint tournant 29 situé à sa base et par un palier 30 qui est situé légèrement au-dessous des bras 16a, 16b. Le palier 30 est supporté par des portiques de stabilisation 31a, 31b qui sont disposés par exemple en croix sur le châssis 4. On voit que la bobine 28 est placée dans l'espace situé sous lesdits portiques stabilisateurs, ce qui limite l'encombrement. Le pivot 17 porte un plateau d'équilibrage 32 ayant la forme d'un disque horizontal qui traverse des fentes découpées horizontalement dans des blocs 33 fixés sur les portiques 31a, 31b.

Selon l'invention, le pivot vertical 17 portant le rotor d'arrosage 15 est entraîné en rotation par des organes de transmission mécanique qui lui communiquent le mouvement de rotation de la turbine après démultiplication.

On a représenté schématiquement sur la figure 1 une transmission qui comporte un réducteur 34 accouplé à la turbine 13. L'arbre de sortie du réducteur 34 porte trois poulies 35, 36, 37. La poulie 35 entraîne, par l'intermédiaire d'une transmission à courroie, un renvoi d'angle 38 qui entraîne une poulie 39 solidaire de la bobine 28. La poulie 36 entraîne, par l'intermédiaire d'une transmission à courroie, un variateur de vitesse 40 qui entraîne, par l'intermédiaire d'un renvoi d'angle 41 une poulie 42 solidaire du pivot 17. Ainsi pendant l'arrosage, la turbine 13 entraîne en rotation le rotor 15 et le variateur de vitesse 40 permet de régler la vitesse du rotor. En variante, le variateur de vitesse 40 peut être entraîné par un petit moteur électrique alimenté par une batterie.

Le chariot 1 porte, de plus, un moteur auxiliaire 43, par exemple un moteur thermique ou un moteur électrique alimenté par des batteries. Les roues motrices 6 des chenillettes sont entraînées en rotation par un différentiel 44 et celui-ci est entraîné, par l'intermédiaire d'un embrayage 46, soit par la turbine 13, par l'intermédiaire de la poulie 37, soit par le moteur auxiliaire 43. Le moteur auxiliaire 43 peut également entraîner en rotation la bobine 28 ou le variateur de vitesse 40. L'embrayage 46 comporte un levier de manoeuvre qui est relié par une tringlerie à un levier 47 situé à l'avant du chariot. Une butée portant un poussoir 48 en saillie est fixée sur le tuyau 2 à proximité de la bouche à eau 3 et lorsque le chariot arrive à proximité de la bouche à eau, le poussoir 48 repousse le levier 47 et celui-ci agit sur le débrayage 46, ce qui arrête automatiqument la progression du chariot. Le chariot porte, de plus, un distributeur hydraulique à tiroir 49 et la tringlerie reliée au levier 47 agit sur ce tiroir 49 qui commande automatiquement la fermeture d'une vanne d'arrêt à commande hydraulique 19 placée sur l'arrivée d'eau 20.

Le moteur auxiliaire 43 sert à déplacer le chariot sur route et avant le début de l'arrosage tandis que la turbine 13 sert à déplacer le chariot d'un mouvement continu pendant l'arrosage et à entraîner en même temps le rotor 15. La bobine 28 est entraînée en rotation à la fin de l'arrosage pour récupérer le tuyau par le moteur auxiliaire 43.

Chaque bras tubulaire 16a et 16b est équipé d'une vanne 50a, 50b à fermeture rapide, par exemple d'une vanne à clef tournante qui s'ouvre ou se ferme par une rotation de la clef d'un quart de tour. Ces vannes 50a et 50b comportent une tige de manoeuvre verticale 51a, 51b dirigée vers le bas qui porte à son extrémité inférieure un organe de manoeuvre en rotation 52a, 52b.

Dans l'exemple des figures 1 à 3, l'organe de manoeuvre est un croisillon à quatre branches en croix. Le chariot 1 porte deux butées en relief 53 et au cours de chaque tour du rotor l'organe de manoeuvre 52 de chaque vanne vient buter successivement sur chaque butée et fait un quart de tour de telle sorte que chaque vanne se trouve successivement ouverte par une butée puis fermée par la butée suivante et que chaque lance arrose dans un secteur circulaire compris entre les deux butées. Par exemple, les deux butées peuvent être placées comme le représente la figure 2 sur deux traverses 54 portées par les portiques 31a et 31b. De préférence, les deux butées sont diamétralement opposées et situées dans le plan de symétrie transversal, de sorte que le rotor arrose seulement un demi-cercle et l'on choisit le demi-cercle situé à l'arrière du chariot qui progresse pendant l'arrosage suivant la flèche F.

La figure 4 représente une vue de dessus partielle d'un autre mode de réalisation dans lequel les organes de manoeuvre en rotation des vannes 50a et 50b sont des pignons 55a et 55b qui coopèrent avec des crémaillères 56a et 56b en forme de secteur denté placées sur un rail circulaire 57a et 57b de telle sorte que l'on peut déplacer les crémaillères pour régler l'ouverture angulaire α du secteur arrosé par le rotor ou pour faire varier l'orientation de ce secteur.

Comme on le voit sur la figure 3 le châssis 4 est un châssis enjambeur qui peut circuler même dans des champs où l'on cultive des plantes en rangées, par exemple des maïs 58. Les chenillettes 5 et la roue directrice 8 sont suffisamment étroites pour circuler entre deux rangées de plantes.

Le fonctionnement de l'appareil décrit est le suivant. Le chariot est automoteur grâce au moteur auxiliaire 43 et il vient se placer à proximité d'une bouche à eau 3. On branche sur cette bouche une extrémité du tuyau 2 qui est enroulé sur la bobine 28. Le chariot s'éloigne alors de la bouche 3 en déroulant derrière lui le tuyau. Arrivé à l'autre l'extrémité du champ, on pose sur le sol le portique 25 portant la poulie de renvoi 24. Le portique 25 est également un portique enjambeur comme le montre la figure 2. On arrête alors le moteur 43. On branche la deuxième extrémité du tuyau sur l'arrivée d'eau 20, puis on va ouvrir la vanne 3. Le chariot se déplace alors d'un mouvement continu dans le sens de la flèche F en revenant vers la bouche à eau 3 et le rotor tourne en étant entraîné par la turbine 13. Grâce au variateur 40 on règle la vitesse de rotation du rotor. Arrivé près de la bouche à eau 3 le poussoir 48 agit sur le levier 47 et arrête la progression du chariot et l'arrosage.

Le portique 25 portant la poulie 24 se déplace dans le même sens que le chariot 1 en étant tiré par le tuyau mais il avance à une vitesse deux fois moindre.

On a décrit un appareil d'arrosage d'un type particulier pour illustrer l'invention. Il est précisé que l'invention protège tout appareil d'arrosage mobile comportant un chariot automoteur portant un rotor selon l'invention qui est entraîné en rotation par un moteur de façon indépendante de la réaction des jets d'eau et qui comporte, de préférence, des vannes coopérant avec des butéespour distribuer l'eau dans un secteur angulaire déterminé.

Revendications de brevet.

1. Appareil mobile d'arrosage par aspersion de surfaces cultivées comportant un chariot automoteur qui est relié à une bouche d'eau par un tuyau flexible et qui porte un rotor d'arrosage comportant des bras tubulaires portant chacun une lance d'arrosage qui sont montés sur un pivot vertical creux, caractérisé en ce que ledit chariot comporte un moteur et des organes de transmission mécanique pour entraîner ledit rotor en rotation continue par ledit moteur, de façon indépendante de la réaction des jets d'eau sortant des lances.

2. Appareil selon la revendication 1 dans lequel ledit chariot comporte une turbine hydraulique qui est entraînée en rotation par l'eau d'arrosage et des moyens de locomotion qui sont entraînés par ladite turbine,
caractérisé en ce que ledit chariot comporte une transmission mécanique comportant un variateur de vitesse, laquelle transmission transmet le mouvement de ladite turbine audit pivot.

3. Appareil d'arrosage selon l'une quelconque des revendications 1 et 2,
caractérisé en ce que chacun des bras tubulaires dudit rotor porte une vanne qui est munie d'une tige de manoeuvre qui est dirigée vers le bas, et qui porte à son extrémité inférieure un organe de manoeuvre en rotation et ledit chariot automoteur porte des butées qui coopèrent avec lesdits organes de manoeuvre, de telle sorte que, au cours de chaque tour du rotor, chaque vanne est successivement ouverte par une butée puis fermée par l'autre butée et que ledit rotor arrose uniquement à l'intérieur d'un secteur circulaire.

4. Appareil d'arrosage selon la revendication 3,
caractérisé en ce que lesdits organes de manoeuvre sont constitués par un croisillon à quatre branches en croix qui rencontrent lesdites butées et qui font pivoter ladite tige de manoeuvre d'un quart de tour.

5. Appareil selon la revendication 4,
caractérisé en ce que lesdits organes de manoeuvre sont des pignons dentés et ledit chariot porte deux crémaillères diamétralement opposées qui engrènent avec lesdits pignons
lorsque ceux-ci passent devant lesdites crémaillères.

6. Appareil selon l'une quelconque des revendications 1 à 4,
caractérisé en ce que ledit pivot de rotor est maintenu par un
palier qui est situé légèrement au-dessous desdits bras tubulaires et ledit chariot porte des portiques stabilisateurs qui
supportent ledit palier.

7. Appareil selon l'une quelconque des revendications 3 à 5,
et selon la revendication 6,
caractérisé en ce que lesdites butées sont portées par lesdits
portiques ou par des rails fixés entre ceux-ci.

8. Appareil selon les revendications 6 et 7,
caractérisé en ce que ledit rotor comporte un plateau d'équilibrage formé d'un disque horizontal qui passe à travers des
fentes découpées horizontalement dans des blocs fixés auxdits
portiques stabilisateurs.

9. Appareil selon l'une quelconque des revendications 6 à 8,
comportant une bobine destinée à recevoir ledit tuyau après
que l'arrosage est terminé,
caractérisé en ce que ladite bobine a un axe vertical confondu
avec l'axe dudit pivot et est placée entre lesdits portiques
stabilisateurs.

10. Appareil selon l'une quelconque des revendications 1 à 9,
caractérisé en ce que ledit chariot comporte un châssis enjambeur équipé de deux chenilles passant sur deux roues qui appuient sur le sol et sur une troisième roue motrice, lesquelles
roues motrices sont entraînées par un différentiel et ledit
chariot comporte des organes de transmission pour accoupler
ledit différentiel à ladite turbine hydraulique pendant l'arrosage et audit moteur auxiliaire pendant les déplacements sur
route et des organes de transmission pour entraîner ledit rotor
par ladite turbine ou par ledit moteur auxiliaire.

11. Appareil d'arrosage selon l'une quelconque des revendications 1 à 10,

caractérisé en ce qu'il comporte, en outre, une poulie verticale fixée à un portique porté par un traîneau et ledit chariot comporte une roue avant directrice à gorge, des rouleaux de guidage transversaux et une arrivée d'eau et ledit tuyau d'arrosage est branché par une de ses extrémités à une prise d'eau, passe dans ladite roue à gorge, sur lesdits rouleaux de guidage, sur ladite poulie verticale et il est connecté sur ladite arrivée d'eau par son autre extrémité.

Fig-1

Fig. 2

3/3

Fig-3

Fig-4

**Office européen des brevets**

**RAPPORT DE RECHERCHE EUROPEENNE**

Numéro de la demande

EP 79 43 0013

| DOCUMENTS CONSIDERES COMME PERTINENTS | | | CLASSEMENT DE LA DEMANDE (Int. Cl.²) |
|---|---|---|---|
| Catégorie | Citation du document avec indication, en cas de besoin, des parties pertinentes | Revendication concernée | A 01 G 25/09 |
| A | FR - A - 2 211 177 (AUBRY-BAUER) <br> * Page 3, ligne 12 - page 4, ligne 24; page 6, lignes 5-18; figures 1,3 * <br><br> ---- | 1 | |

DOMAINES TECHNIQUES RECHERCHES (Int. Cl.²)

A 01 G

CATEGORIE DES DOCUMENTS CITES

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 10-09-1979 | HERIJGERS |

OEB Form 1503.1  06.78